# EUROPEAN PATENT APPLICATION

(11) **EP 2 481 744 A1**
(43) Date of publication of application: **01.08.2012**
(21) Application number: 11152971.5
(22) Date of filing: 01.02.2011
(51) Int. Cl.: C07F 9/24, C08K 5/5399

(54) **Aromatic bis-phosphoramidate additives as flame retardants for polymers**

(71) Applicant: EMPA Eidgenössische Materialprüfungs- und Forschungsanstalt, CH-8600 Dübendorf (CH)
(72) Inventor: Schmid, Hansruedi, CH-9016 St. Gallen (CH); Gaan, Sabyasachi, CH-9014 St. Gallen (CH)
(74) Representative: Schmauder & Partner AG Patent- & Markenanwälte VSP

(57) **Abstract**

The invention relates to a novel flame retardant substance, namely phosphora- midic acid, 1,4-phenylenebis-, tetraisopropyl ester. Moreover, the invention relates to the use of two further, previously known, aromatic bisphosphoramidates as flame retardant substances. 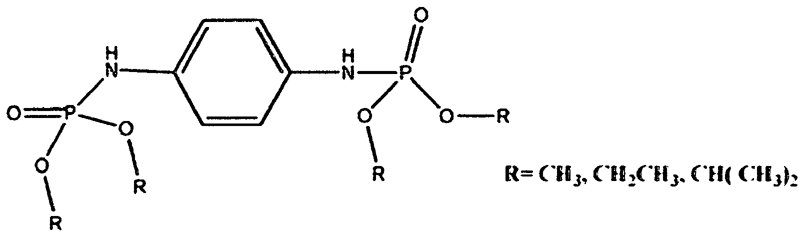 Phosphoramidic acid, 1,4-phenylenebis-, tetramethyl ester **(*p*-PAPTME)**
Phosphoramidic acid, 1,4-phenylenebis-, tetraethyl ester **(*p*-PAPTEE)**
Phosphoramidic acid, 1,4-phenylenebis-, tetra isopropyl ester **(*p*-PAPTiPE)**

## Description

### Technical Field of the Invention

The present invention relates to the general field of flame retardant substances.

### Background of the Invention

There has been increased impetus to the development of novel flame retardants (FRs) for application on polymeric material. Flame retardants commonly used for development of polymeric materials are of three different kinds i.e. halogen based compounds, phosphorus based organic compounds and inorganic salts and metal hydroxides. Some halogen based FRs have shown serious environmental problems and metal hydroxides work only at very high loading levels. Thus development of novel phosphorus compounds has become imperative due to its versatility and flame retardant effectiveness in different polymeric substrates [1]. Organophosphorus compounds based on phosphoramidate structures seem to be very effective on various polymers. In our earlier work we developed aliphatic phosphoramidates which are shown to be very effective on cellulose [2].

The use of phosphoramidates as flame retardants has been explored in several other investigations. Most of the work has been focussed on development of aliphatic phosphoramidates [3-7] and aromatic mono-phosphoramidates [8-10] for various polymeric systems like polyester, cellulose, polyurethane, cellulose acetate etc. A drawback of these compounds is their limited commercial availability and/or high cost, but also the low yield in their preparation.

More recently some aromatic bis-phosphoramidates have been developed for application in polymers like polycarbonate, polyphenylene ethers and acrylonitrile- butadiene-styrene copolymers [11, 12]. The phosphoramidates synthesized in this more recent work have been shown to be effective as flame retardants. The drawback of these phosphoramidates is that they have rather small phosphorus contents of 10 to 12% (due to presence of phenolic esters), which means higher weight % of these compounds has to be added to polymer to achieve good flame retardancy. Also, the synthesis process described in their research comprises multiple steps (which reduces the yield) and uses a raw material (phosphorodichloridic acid, P,P'-1,3-phenylene ester) which is not available commercially [11, 12].

Accordingly, there is still a need for further development of flame retardant compounds with more favorable properties.

### Summary of the Invention

According to one aspect of the invention, it was found that a group of bisphosphoramidate compounds have several advantageous properties, particularly as to what concerns their flame retardant properties. They are suitable, in particular, for use on viscose fibers. It is the following group of compounds:
- phosphoramidic acid, 1,4-phenylenebis-, tetramethyl ester (p-PAPTME),
- phosphoramidic acid, 1,4-phenylenebis-, tetraethyl ester (p-PAPTEE), and
- phosphoramidic acid, 1,4-phenylenebis-, tetraisopropyl ester (p-PAPTiPE).

According to another aspect of the invention, there is provided a novel bisphosphoramidate compound, namely phosphoramidic acid, 1,4-phenylenebis-, tetraisopropyl ester (p-PAPTiPE).

Owing to their insolubility in water, the compounds are very suitable as flame retardants for textiles and other surfaces. In particular, they can be incorporated in viscose fibers or applied as flame retardant coating on an object to be protected.

The content of flame retardant added to viscose will depend on the particular application but will generally be in the range of about 15 to about 25%, preferably around 20%, i.e. about 19 to about 21 % by weight.

According to a further aspect of the invention, there is provided an article with improved flame resistance, the article comprising one of the above mentioned compounds as a flame retardant substance. In particular, the flame retardant substance can be incorporated in a viscose film or in a viscose fiber.

According to yet another aspect of the invention, there is provided a method of preparing a compound selected from the group consisting of phosphoramidic acid, 1,4-phenylenebis-, tetraalkyl esters, wherein alkyl is methyl, ethyl or isopropyl, comprising the step of reacting two equivalents of dialkyl hydrogen phosphite, one equivalent of para phenylene diamine, two equivalents of triethylamine and two equivalents of carbon tetrachloride in acetonitrile.

### Detailed description of the invention

Flame retardant application of aromatic bis-phosphoramidates with a high phosphorus content of at least 16% has not been explored previously. Aromatic phosphoramidates are thermally more stable and result in higher residue after burning. The present invention is related to the development of aromatic bisphosphoramidate based flame retardants whose structures are shown in Scheme 1. The name of these aromatic bisphosphoramidates are Phosphoramidic acid, 1,4-phenylenebis-, tetramethyl ester(p-PAPTME), Phosphoramidic acid, 1,4-phenylenebis-, tetraethyl ester(p-PAPTEE) and Phosphoramidic acid, 1,4-phenylenebis-, tetra isopropyl ester(p-PAPTiPE). The structures of these bisphosphoramidates have been verified using NMR data.

These aromatic bis-phosphoramidates have a very high phosphorus content of 14 to 19% and can be synthesized from comparatively low-cost intermediates. The phosphoramidates thus synthesized are insoluble in water (Table 1) and most organic solvents. They were found to be thermally stable (> 200°C) and white in appearance. They can thus be added as pigments to various polymers to act as flame retardant additives. In particular, they were found suitable as flame retardant additive in polymers like cellulose and its derivatives.

In particular, these compounds have been found to be very effective for manufacturing of flame retardant regenerated cellulose. 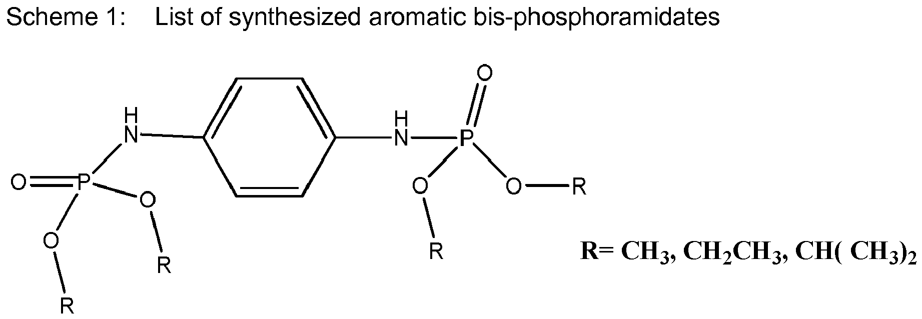 Phosphoramidic acid, 1,4-phenylenebis-, tetramethyl ester(p-PAPTME)
Phosphoramidic acid, 1,4-phenylenebis-, tetraethyl ester(p-PAPTEE)
Phosphoramidic acid, 1,4-phenylenebis-, tetra isopropyl ester(p-PAPTiPE)

### Synthesis

The bis-phosphoramidates disclosed here have been prepared according to the method shown in Scheme 2:

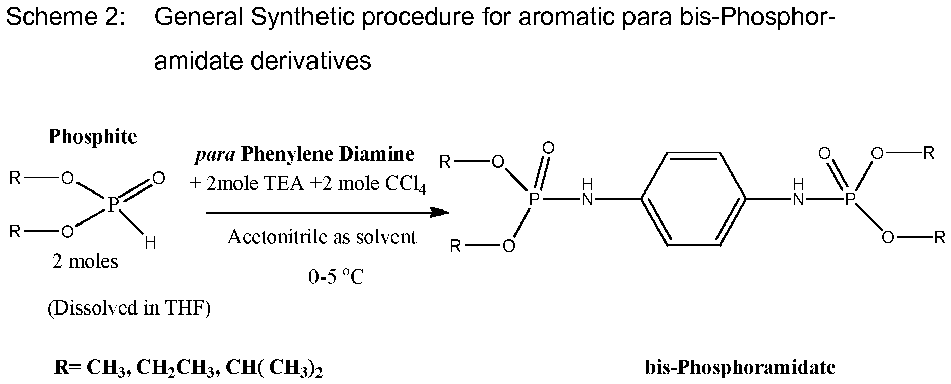

In order to prepare a given one of the above compounds, i.e. a given phosphoramidic acid, 1,4-phenylenebis-, tetraalkyl ester, wherein alkyl is either methyl or ethyl or isopropyl, one starts with the corresponding dialkyl hydrogen phosphite (also called "dialkyl phosphonate" or just shortened to "phosphite" in the present context). In the following experiments, 2 moles of the requisite phosphite dissolved in 500 ml of dry THF were taken in a three neck flask (2 litre) connected to a mechanical stirrer and a thermometer. The contents of the flask were cooled down to 0°C with an ice bath. 1 mole of para phenylene diamine, 2 moles of triethylamine (TEA) and 2 moles of carbon tetrachloride (CCl₄) dissolved in dry acetonitrile (1000 ml) were added slowly to the flask under a nitrogen flow over a period of 5 hrs. After the addition was complete, the reaction mixture was then left stirring overnight at room temperature. The white precipitate formed was filtered off and dried. It was repeatedly washed with water to remove the triethyl amine hydrochloride salt and dried. The white residue left is insoluble in most organic solvents and hence further cleaning was done with diethyl ether and ethanol to remove any starting material and by-products formed. Finally, the white powder was dried in vacuum at 40°C. The compounds were obtained as white powders in excellent yields greater than 80%. The structure of the compounds was confirmed with nuclear magnetic resonance (NMR) and Fourier Transform Infrared (FTIR) spectroscopy data.

A selection of physical properties of the above mentioned compounds is listed in Table 1.

**Table 1: Physical properties of synthesized compounds**

| | **Physical Property** | | | | | | |
|---|---|---|---|---|---|---|---|
| **Compound** | **M [g/mol]** | **P [%]** | **N [%]** | **yield [%]** | **Color** | **Melting Point (°C)** | **Solubility* g/L** |
| **p-PAPTME** | 324.21 | 19.1 | 8.6 | 85 | white | 215 | 0.33 |
| **p-PAPTEE** | 380.31 | 16.3 | 7.4 | 92 | white | 228 | 0.047 |
| **p-PAPTiPE** | 436.43 | 14.2 | 6.4 | 83 | white | none | 0.056 |

| | | | | | | | |
|---|---|---|---|---|---|---|---|
| *Solubility: 0.5 gm of sample was put in 50 ml deionized water and left in a shaking flask at 21 °C for 16 hrs. The water was then analyzed for phosphorus content using inductively coupled plasma optical emission spectroscopy (ICP-OES). | | | | | | | |

### Literature reference of compounds mentioned in this application

The compounds disclosed in this invention have not been used as flame retardant additive in polymers. The compound p-PAPTME has been previously synthesized and the yield was approximately 20% [13]. There is no reference available for p-PAPTiPE. Synthesis of p-PAPTEE has been reported in literature for pharmaceutical applications [14, 15].

### Limiting Oxygen Index

The Limiting Oxygen (LOI) value of viscose films was measured according to the ASTM -2863 method using Fire Testing Technology Instrument. The LOI and char contents reported further below (cf. Table 4) are each the average value for 5 samples.

### Total heat of combustion measurements

The total heat of combustion (HC), peak heat release rate (PHRR), temperature of max HRR and % residue were measured using a pyrolysis flow combustion calorimeter (PCFC) instrument (Fire Testing Technology Instrument). The samples were heated in an inert atmosphere of nitrogen from 40 to 800°C at a heating rate of 1°C/sec. The pyrolysis products are swept away into a combustor where they are oxidized. The heat release rates of decomposing samples were measured as a function of time. The values reported below are average values for three samples.

### Thermogravimetric analysis (TGA)

The thermal decomposition studies of bisphosphoramidates, cellulose and viscose samples were carried out on a Netzsch TG 209 F1 Iris® instrument under a nitrogen environment (50 ml /min) at a heating rate 10°C/ min from 40 to 800°C. Each sample was tested at least three times to confirm the reproducibility of the data.

### Thermal Stability of synthesized bis-phosphoramidates

The synthesized bis-phosphoramidate compounds were analysed for their thermal properties using a TGA instrument. The results are outlined in Table 2 below.

The onset of thermal decomposition of the synthesized compounds is between 200 to 250°C. This property is ideally suited for cellulosic polymers which require the flame retardant to decompose earlier than the cellulose itself. The decomposing flame retardant reacts with cellulose to form char and less flammable volatile gasses. The flame retardant property of these compounds can be further observed from their ability to form char at higher temperatures. All the synthesized compounds leave considerable amount of char at 500 and 800°C. This also proves the condensed phase action of the bis-phosphoramidate compounds.

**Table 2: Thermal properties of synthesized compounds**

| **PCFC Data** | | | | **TGA Data** | | |
|---|---|---|---|---|---|---|
| **Compound** | **THC(kJ/g)** | **PHRR (W/g)** | **Char at 800 °C** | **Residue at 500 °C** | **Residue at 800 °C** | **Onset of decomposition, °C** |
| **p-PAPTME** | 7.99 | 201 | 34 | 36 | 20 | 214 |
| **p-PAPTEE** | 11.54 | 89 | 28 | 27 | 15 | 229 |
| **p-PAPTiPE** | 13.26 | 696 | 15 | 37 | 22 | 232 |

### Thermal properties of cellulose containing bis-phosphoramidates

As a proof of concept that these compounds have flame retardant properties, the synthesized compounds were incorporated in cotton cellulose and tested for their thermal properties. Cellulose (cotton fibres) was powdered by using ball milling machine to particle size of around 10 microns. Homogenous pellets of cotton cellulose containing 20% by weight of bis-phosphoramidates were prepared with help of hydraulic press. These pellets were then subjected to thermal analysis, the results of which are shown in Table 3.

**Table 3: Thermal and PCFC data for bisphosphoramidate containing cellulose**

| **Sample** | **PCFC Data** | | | **TGA Data** | | |
|---|---|---|---|---|---|---|
| | THC(kJ/g) | PHRR (W/g) | Char at 800 °C | Residue at 500 °C | Residue at 800 °C | Onset of decomposition, °C |
| Cellulose* | 9 | 190 | 15 | 15 | 3 | 310 |
| **Cellulose+ 20% p-PAPTME** | 1.9 | 48 | 42 | 41 | 34 | 235 |
| **Cellulose+ 20% p-PAPTEE** | 2.8 | 133 | 36 | 40 | 33 | 242 |
| **Cellulose+ 20%p-PAPTiPE** | 2.9 | 180 | 38 | 37 | 22 | 232 |

The PCFC data of cellulose containing the bis-phosphoramidate compounds show a reduction of HRR, THC values and increase in char content as compared to virgin cotton cellulose. The reduction of HRR and THC of bis-phosphoramidate containing cellulose is a clear indication of their flame retardant property.

The above TGA data of bis-phoshoramidate containing cotton cellulose show increased residue at elevated temperatures (500 and 800°C) and also reduction in the onset of thermal decomposition as compared to virgin cotton cellulose (i.e. to cotton cellulose without additives). These results clearly indicate that the bisphosphoramidate compounds can catalyse the thermal decomposition of cellulose to happen at a lower temperature and increase the formation of residue. This phenomenon clearly proves the condensed phase action of these compounds.

### Thermal and flame retardant property of viscose films containing PAPTME

To further prove the suitability of these compounds to the viscose manufacturing process, PAPTME as a model compound was incorporated in soda cellulose xanthate (viscose dope) and casted as thin cellulose films. The viscose manufacturing process requires good stability of the flame retardant additive in a wide pH range of 2 to 14. The viscose films containing PAPTME were casted, and further thermal and flame retardant tests were carried out. The compounds disclosed in this invention have been found particularly effective in flame retarding regenerated cellulose i.e. viscose rayon. These compounds were added as pigments to the viscose rayon due to its good stability to acids and bases. The flame retardant properties of treated viscose rayon are shown in Table 4.

**Table 4: Thermal and flame retardant properties of viscose films containing p-PAPTME**

| Treatment | LOI values % | Pyrolysis studies | | | Char content at 600°C (TGA) % |
|---|---|---|---|---|---|
| | | Total heat of combustion KJ/g | Peak heat release rate W/g | Char at 800°C % | |
| Virgin Viscose | 17 | 6.98 | 183 | 15.1 | 1 |
| Viscose + 20% p-PAPTME | 27-28.5 | 2.45 | 63 | 37.8 | 23 |

From Table 4 it is clearly seen that p-PAPTME treated viscose has superior flame retardancy properties as compared to virgin viscose. Addition of p-PAPTME to viscose increases the LOI values, and char content reduces the THC and HRR. The fact that viscose films with good flame retardant properties could be made clearly indicates the suitability and stability of these bis-phosphoramidates in viscose manufacturing process.

### Other Structures which could be included or may have similar flame retardant behavior

It has been surprisingly found that bis-phosphoramidates synthesized from para phenylene diamines and phosphites such as dimethyl, diethyl and isopropyl phosphites are excellent flame retardants. One could envision other analog bisphosphoramidate compounds which could be synthesized similarly from amines such as meta and ortho phenylene diamines and phosphites such as any dialkyl or diphenyl phosphites. The general structures of such kinds of phosphites are shown in Scheme 3. These derivatives of amine and phosphites may also have useful flame retardant property for different polymers. It is understood that increasing the alkyl chain lengths will lead to increase in hydrocarbon content (fuel) and thus would tend to reduce their usefulness as flame retardants.

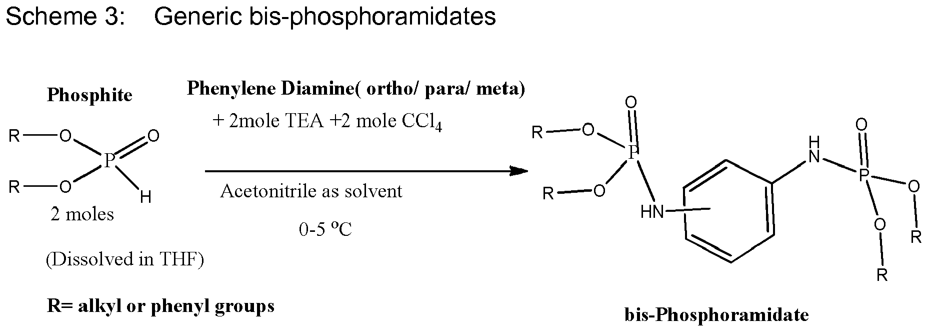

### References

[1] Zhang, S. and A.R. Horrocks, A review of flame retardant polypropylene fibres. Progress in Polymer Science, 2003. 28(11): p. 1517-1538.
[2] Thermal decomposition and burning behavior of cellulose treated with ethyl ester phosphoramidates: Effect of alkyl substituent on nitrogen atom, Sabyasachi Gaan, Patrick Rupper, Viktoriya Salimova, Manfred Heuberger, Stefan Rabe, Frédéric Vogel, Polymer Degradation and Stability, Volume 94, Issue 7, July 2009, Pages 1125-1134
[3] US 3,966,478 (Toy).
[4] US 2,832,745 (Hechenbleikner).
[5] GB 1 312 211 (Stauffer Chemical Company).
[6] GB 1 025 814 (Stauffer Chemical Co).
[7] US 3,440,222 (Walsh).
[8] Groebe, A.; Metzger, W.; Herlinger, H. Production of flame - retardant polyamide filaments and fabrics. Chemiefasern/Textilindustrie (1980), 30(2), 107-10.
[9] Flame retardant dope additives for regenerated cellulose fibers. Wolf, R. Sandoz Ltd., Basel, Switz. Editor(s): Bhatnagar, Vijay Mohan. Fire Retard., Proc. Eur. Conf. Flammability Fire Retard., 1 st (1979), Meeting Date 1977, 181-92.
[10] Langley, J. T.; Drews, M. J.; Barker, R. H. Pyrolysis and combustion of cellulose. VII. Thermal analysis of the phosphorylation of cellulose and model carbohydrates during pyrolysis in the presence of aromatic phosphates and phosphoramides. Journal of Applied Polymer Science (1980), 25(2), 243-62.
[11] Nguyen, Congtranh; Kim, Jinhwan. Thermal stabilities and flame retar-dancies of nitrogen-phosphorus flame retardants based on bisphosphoramidates. Polymer Degradation and Stability (2008), 93(6), 1037-1043.
[12] US 5,973,041 (Campbell).
[13] Avdeenko, A. P.; Ryazantsev, V. P.; Postoronko, A. I. Synthesis and mass spectra of N-[dialkyl(thio)phosphono] derivatives of p-aminophenol and p-phenylenediamine. Voprosy Khimii i Khimicheskoi Tekhnologii (1987), 83 73-81.
[14] Studies on phosphorylation of conjugated aromatic diamines. Synthesis of N,N'-bis [O,O-dialkylphosphoryl] derivatives of aromatic diamines. Tsai, Chi-Ying. Dep. Pharmacol., Auhwei Coll. Chin. Med., Peop. Rep. China. Kexue Tongbao (Chinese Edition) (1980), 25(19), 908-9.
[15] Synthesis of N,N'-bis(dialkylphosphoryl) aromatic diamines. Cai, Jiying; Chen, Kwilin. Dep. Pharmacol., Anhui Coll. Traditional Chinese Med., Pe-op. Rep. China. Huaxue Xuebao (1981), (Zengkan), 273-6.

## Claims

1. An aromatic bisphosphoramidate compound, namely:
- phosphoramidic acid, 1,4-phenylenebis-, tetraisopropyl ester (p-PAPTiPE).

2. Use of a compound selected from the group consisting of:
- phosphoramidic acid, 1,4-phenylenebis-, tetramethyl ester (p-PAPTME),
- phosphoramidic acid, 1,4-phenylenebis-, tetraethyl ester (p-PAPTEE), and
- phosphoramidic acid, 1,4-phenylenebis-, tetraisopropyl ester (p-PAPTiPE)
as a flame retardant substance.

3. The use according to claim 2, wherein the compound is p-PAPTME.

4. The use according to claim 2 or 3, for the incorporation in viscose fibers.

5. The use according to claim 2 or 3, for the application as a flame retardant coating.

6. An article with improved flame resistance, comprising a compound selected from the group consisting of:
- phosphoramidic acid, 1,4-phenylenebis-, tetramethyl ester (p-PAPTME),
- phosphoramidic acid, 1,4-phenylenebis-, tetraethyl ester (p-PAPTEE), and
- phosphoramidic acid, 1,4-phenylenebis-, tetraisopropyl ester (p-PAPTiPE).
as a flame retardant substance.

7. The article according to claim 6, wherein the flame retardant substance is p-PAPTME.

8. The article according to claim 6 or 7, wherein the flame retardant substance is incorporated in a viscose film.

9. The article according to claim 6 or 7, wherein the flame retardant substance is incorporated in a viscose fiber.

10. A method of preparing a compound selected from the group consisting of phosphoramidic acid, 1,4-phenylenebis-, tetraalkyl esters, wherein alkyl is methyl, ethyl or isopropyl, comprising the step of reacting two equivalents of dialkyl hydrogen phosphite, one equivalent of para phenylene diamine, two equivalents of triethylamine and two equivalents of carbon tetrachloride in acetonitrile.
